# EUROPEAN PATENT APPLICATION

(11) **EP 4 556 742 A1**
(43) Date of publication of application: **21.05.2025**
(21) Application number: 23862210.4
(22) Date of filing: 28.08.2023
(51) Int. Cl.: F16D 125/18, F16D 65/16, F16D 65/092, F16D 121/24

(54) **BRAKE CALIPER**

(30) Priority: 05.09.2022 CN 202211079791
(71) Applicant: Bethel Automotive Safety Systems Co., Ltd., Wuhu, Anhui 241009 (CN)
(72) Inventor: LI, Yundong, Wuhu, Anhui 241009 (CN); ZHU, Yuancheng, Wuhu, Anhui 241009 (CN); GUO, Fengliang, Wuhu, Anhui 241009 (CN); XUAN, Ming, Wuhu, Anhui 241009 (CN); DING, Wenyan, Wuhu, Anhui 241009 (CN); ZOU, Jiutao, Wuhu, Anhui 241009 (CN)
(74) Representative: Canzler & Bergmeier Patentanwälte Partnerschaft mbB
(86) International application number: PCT/CN2023/115280
(87) International publication number: WO 2024/051514

(57) **Abstract**

A brake caliper, comprising a brake caliper body (1) and an actuator (2). The actuator (2) comprises a housing and a motor; a caliper body flange (la) is provided on the brake caliper body (1); the caliper body flange (1a) extends in a radial direction; a first fixing point and a second fixing point for mounting the housing are provided on the caliper body flange (1a); and the motor and the second fixing point are located on the outer side of the brake caliper body (1). The brake caliper can reduce the risk of damage to the motor.

## Description

### FIELD OF TECHNOLOGY

The present disclosure generally relates to braking systems technologies, particularly a brake caliper.

### BACKGROUND

Motors used in electromechanical brakes are generally quite large and heavy. In related technologies, a flange is added to the output end housing of the motor generator unit (MGU) and fixed to the caliper body with screws. The fixing point of the MGU is at the opposite end of the motor, which runs parallel to the output end housing. The motor is connected to the caliper body via the housing, leaving the motor end suspended. Essentially, the MGU functions as a cantilever beam structure. Under vibration conditions, the motor end experiences significant amplitude, leading to potential mechanical fatigue due to the motor end's oscillation within the motor housing. Additionally, the motor's weight and high center of gravity relative to the fixing point result in insufficient fixing strength between the output end housing and the caliper flange. Under these conditions, both the motor and electronic components are highly susceptible to failure.

### SUMMARY

The present disclosure aims to solve at least one of the technical problems existing in the prior art. To this end, the present disclosure provides a brake caliper to reduce the risk of motor damage.

The present disclosure provides a brake caliper, comprising a brake caliper body and an actuator with a housing and a motor, wherein the brake caliper body is equipped with a caliper flange, the caliper flange extends in the radial direction, wherein a first fixing point and a second fixing point for installing the housing are arranged on the caliper flange, wherein the motor and the second fixing point are located on an external surface of the brake caliper body.

Optionally, the brake caliper comprises: a first housing section connected to the caliper flange at the first fixing point, and a second housing section connected to the caliper flange at the second fixing point, wherein the motor is located in the second housing section.

Optionally, the first housing section and the second housing section are connected to the caliper flange by screws, bolts, or rivets.

Optionally, the first housing section and the second housing section are connected to the caliper flange by one or more screws, bolts, or rivets.

Optionally, outer surfaces of the first housing section and the second housing section are each provided with a housing flange, the housing flange has through holes, and the caliper flange has internal threads.

Optionally, the caliper flange is provided with a clearance hole configured for the second housing section to pass through.

Optionally, the second housing section is a cylindrical body, and the clearance hole is circular.

Optionally, the clearance hole extends along a thickness direction of the caliper flange, and an axis of the clearance hole is parallel to an axis of a cylinder bore of the brake caliper body.

Optionally, a length of the second housing section is greater than a depth of the clearance hole.

Optionally, the caliper flange is provided with caliper lugs, the caliper lugs are configured to be connected to guide pins or guide pin screws through holes.

Optionally, the caliper flange is provided with caliper lugs, which are connected to the caliper flange, and the flange surface is in contact with the housing.

Optionally, two caliper lugs are provided, and both caliper lugs are connected to the caliper flange.

The brake caliper of the present disclosure, by increasing the area of the caliper flange and fixing the motor directly on the caliper body, ensures the motor stress is uniform, reduces the mechanical damage to the motor due to vibration conditions, effectively protects the motor, and thereby reduces the risk of motor damage.

### BRIEF DESCRIPTION OF THE DRAWINGS

The drawings are as follows:
FIG. 1 is an exploded schematic diagram of the brake caliper of the present disclosure;
FIG. 2 is a schematic diagram of the brake caliper body;

### Reference Numerals

1, Brake Caliper Body;1a, Caliper Flange; 1b, Caliper Lugs; 2, Actuator; 3, Screws; 4, Internal Brake Pads;5, Bracket; 6, External Brake Pads.

### DETAILED DESCRIPTION

In conjunction with the accompanying drawings, the following description of the embodiments provides a detailed explanation of the specific implementation of the present disclosure. The aim is to help those skilled in the art gain a comprehensive, accurate, and in-depth understanding of the concept and technical solutions of the present invention, thus facilitating its implementation.

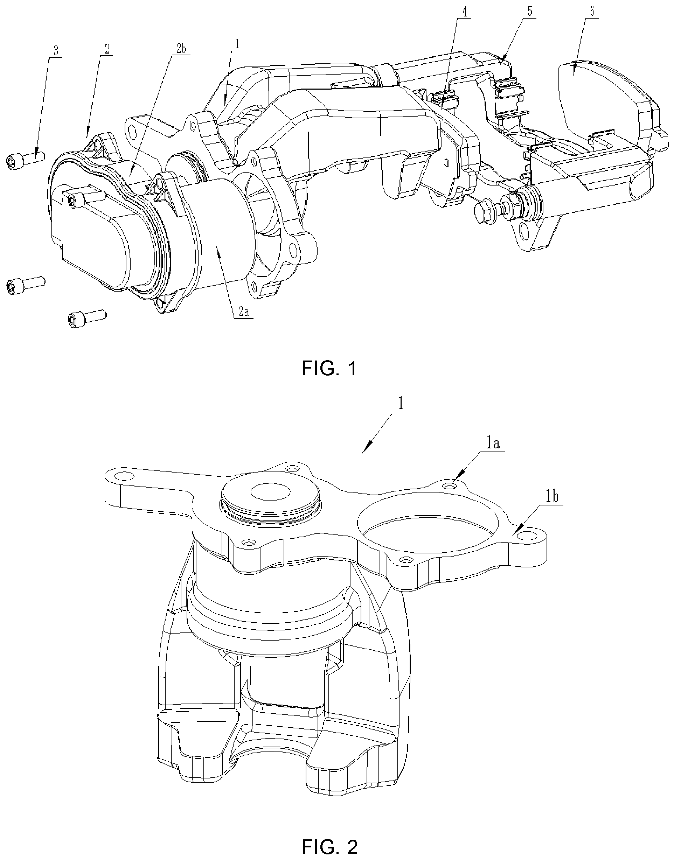

As shown in FIG. 1 and FIG. 2, the present disclosure provides a brake caliper comprising a brake caliper body 1, a motion conversion mechanism, and an actuator 2. The actuator 2 comprises a housing, a motor, and a gear transmission mechanism, the gear transmission mechanism is connected to an output end of the motor, and the motor drives the gear transmission mechanism to operate. The gear transmission mechanism is used to transfer the rotational torque generated by the motor to the motion conversion mechanism, driving the motion conversion mechanism to carry out corresponding actions; the motion conversion mechanism converts the rotary motion of the motor through the gear transmission mechanism to drive the lead screw to complete the rotary motion, and then converts it into the linear motion of the piston to realize the braking and releasing functions of the brake caliper. The brake caliper body 1 is equipped with a caliper flange 1a; the caliper flange 1a extends in the radial direction; a first fixing point and a second fixing point for installing the housing are arranged on the caliper flange 1a, wherein the motor and the second fixing point are located on an external surface of the brake caliper body 1.

Specifically, as shown in FIG. 1, the caliper flange 1a is fixedly disposed at one end of the brake caliper body 1, and the housing of the actuator 2 is fixedly mounted on the caliper flange 1a by screws 3. The housing is a hollow structure internally, capable of accommodating both the motor and the gear transmission mechanism. The brake caliper body 1 is fitted with the motion conversion mechanism and internal and external brake pads, and the motion conversion mechanism is disposed in a cylinder bore of the brake caliper body 1, the structure of which is as well known to those skilled in the art, and will not be repeated herein.

As shown in FIG. 1 and FIG. 2, the actuator housing comprises a first housing section 2a and a second housing section 2b connected to the first housing section 2a, the first housing section 2a extends toward the external surface of the second housing section 2b, the first housing section 2a is connected to the caliper flange 1a at a first fixing point, the second housing section 2b is connected to the caliper flange 1a at a second fixing point, the motor is disposed in the inner cavity of the second housing section 2b, and the gear transmission mechanism is located in the inner cavity of the first housing section 2a. The second housing section 2b is a hollow cylindrical structure, and the inner cavity of the second housing section 2b is a cylindrical cavity.

As shown in FIG. 1 and FIG. 2, the first housing section 2a and the second housing section 2b are connected to the caliper body flange 1a by screws 3. The first housing section 2a and the second housing section 2b are provided with flanges on their external surfaces, the housing flanges are provided with through holes for the screws 3 to pass through, and the caliper body flange 1a is provided with female threaded holes for the screws 3 to be inserted. The housing is fixed directly to the brake caliper body 1 by the screws 3, which ensures a more solid fixation and improved vibration resistance. This allows the motor to be subjected to a uniform force, thereby effectively protecting it from damage caused by vibrations.

As shown in FIG. 1 and FIG. 2, in this embodiment, the first housing section 2a and the second housing section 2b are both connected to the caliper flange 1a by two screws 3. Accordingly, two female threaded holes for the screws 3 to pass through are provided at the first fixing point on the caliper body flange 1a. At the second fixing point on the caliper flange 1a, two female threaded holes are also provided for the screws 3 to pass through. The first fixing point and the second fixing point are arranged sequentially along the length direction of the caliper flange 1a, and the length direction of the caliper flange 1a is perpendicular to an axis direction of the cylinder bore of the brake caliper body 1.

As shown in FIG. 1 and FIG. 2, the caliper flange 1a is provided with a clearance hole for the second housing section 2b to pass through. The second housing section 2b is a cylinder, the clearance hole is a cylindrical through hole which the second housing can pass through, and the clearance hole extends along a thickness direction of the caliper flange, and an axis of the clearance hole is parallel to an axis of a cylinder bore of the brake caliper body 1, a length of the second housing section 2b is greater than a depth of the clearance hole. Therefore, by adding a flange structure to the caliper body and forming an annular structure encircling the second housing section 2b at the clearance hole, and by suiting the motor within the annular structure, the vibration amplitude of the motor can be effectively reduced.

As shown in FIG. 1 and FIG. 2, the caliper flange 1a is provided with a caliper lug 1b, the caliper lug 1b is connected to a flange surface on the caliper flange 1a, the flange surface is in contact with the surface of the housing, the flange surface is a plane perpendicular to the axis of the cylinder bore of the brake caliper body 1, and the flange surface is provided with female threaded holes that allow the screw 3 to pass through. The upward shift of the position of the caliper lugs 1b is beneficial for the balance of the motor's center of gravity and overall balance.

As shown in FIG. 1 and FIG. 2, the number of the caliper lugs 1b is two, and the two caliper lugs 1b are connected to the caliper body flange 1a.

The above exemplary description of the present disclosure is given in conjunction with the accompanying drawings. Obviously, the specific implementation of the present disclosure is not limited to the methods described above. Any non-substantial modifications made by adopting the methodical concepts and technical solutions of the present disclosure; or applying the aforementioned concepts and technical solutions directly to other situations without modification, all fall within the scope of protection of the present disclosure.

## Claims

1. A brake caliper, comprising a brake caliper body and an actuator with a housing and a motor, wherein the brake caliper body is equipped with a caliper flange, the caliper flange extends in a radial direction, wherein a first fixing point and a second fixing point for installing the housing are arranged on the caliper flange, wherein the motor and the second fixing point are located on an external surface of the brake caliper body.

2. The brake caliper according to claim 1, wherein the housing comprises: a first housing section connected to the caliper flange at the first fixing point, and a second housing section connected to the caliper flange at the second fixing point; wherein the motor is located in the second housing section.

3. The brake caliper according to claim 2, wherein the first housing section and the second housing section are connected to the caliper flange by screws, bolts, or rivets.

4. The brake caliper according to claim 3, wherein outer surfaces of the first housing section and the second housing section are each provided with a housing flange, the housing flange has through holes, and the caliper flange has female threads.

5. The brake caliper according to claim 2, wherein the caliper flange is provided with a clearance hole configured for the second housing section to pass through.

6. The brake caliper according to claim 5, wherein the second housing section is a cylindrical body, and the clearance hole is a circular hole.

7. The brake caliper according to claim 6, wherein the clearance hole extends along a thickness direction of the caliper flange, and an axis of the clearance hole is parallel to an axis of a cylinder bore of the brake caliper body.

8. The brake caliper according to claim 5, wherein a length of the second housing section is greater than a depth of the clearance hole.

9. The brake caliper according to any of claims 1 to 8, wherein the caliper flange is provided with caliper lugs, the caliper lugs are configured to be connected to guide pins or guide pin screws through holes.
